# EUROPÄISCHE PATENTSCHRIFT

(11) **EP 4 210 893 B1**
(45) Veröffentlichungstag und Bekanntmachung des Hinweises auf die Patenterteilung: **02.04.2025**
(21) Anmeldenummer: 21773549.7
(22) Anmeldetag: 07.09.2021
(51) Int. Cl.: B23K 26/0622, B23K 26/06, B23K 26/244, B23K 26/324, B29D 11/00, B23K 103/00, B23K 103/18

(54) **VERFAHREN ZUM VERBINDEN EINES OPTISCHEN KRISTALLS MIT EINEM SUBSTRAT**
METHOD FOR JOINING AN OPTICAL CRYSTAL TO A SUBSTRATE
PROCÉDÉ POUR RELIER UN CRISTAL OPTIQUE À UN SUBSTRAT

(30) Priorität: 09.09.2020 DE 102020211282
(43) Veröffentlichungstag der Anmeldung: 19.07.2023
(73) Patentinhaber: Q.ant GmbH, 70565 Stuttgart (DE)
(72) Erfinder: ZIMMERMANN, Felix, 71254 Ditzingen (DE); FOERTSCH, Michael, 91522 Ansbach (DE); HENGESBACH, Stefan, 70469 Stuttgart (DE); ERMANTRAUT, Eugen, 71229 Leonberg (DE)
(74) Vertreter: Trumpf Patentabteilung
(86) Internationale Anmeldenummer: PCT/EP2021/074568
(87) Internationale Veröffentlichungsnummer: WO 2022/053455

(56) Entgegenhaltungen:
- DE-B3- 102013 211 977
- JP-A- 2013 038 727
- US-A1- 2013 344 302

## Beschreibung

Die vorliegende Erfindung betrifft ein Verfahren zum Verbinden eines optischen

Kristalls mit einem Substrat entsprechend dem Oberbegriff des Anspruchs 1 (siehe z.B. US 2013/0344302 A1).

Für die Herstellung bzw. Definition von Lichtwellenleitern auf Chip-Ebene sind benachbarte Bereiche mit unterschiedlichen Brechungsindizes erforderlich. Die Variation der Brechungsindizes zur Herstellung dieser Bereiche erfolgt derzeit vorwiegend durch eine Modifikation des Brechungsindexes ein- und desselben Materials bzw. Werkstoffs in Form eines (nichtlinearen) optischen Kristalls. Auf diese Weise können jedoch nur geringe Unterschiede im Brechungsindex realisiert werden. Größere Brechungsindex-Unterschiede können durch die Verwendung unterschiedlicher Materialien realisiert werden, wodurch die Effizienz der nachfolgend eingebrachten Wellenleiter deutlich gesteigert werden kann. Zu diesem Zweck ist es erforderlich, die unterschiedlichen Materialien zu fügen bzw. miteinander zu verbinden.

Ein Verfahren zum Verbinden bzw. zum Fügen von unähnlichen Materialien ist in dem Artikel "Bonding of lithium niobate to silicon in ambient air using laser radiation", H. Kawano et al., 2016 Jpn. J. Appl. Phys. 55, Nr. 8S3, 08RB09 beschrieben. Dort erfolgt die Laserbestrahlung unter Verwendung von Nanosekunden-Laserpulsen bei Raumtemperatur in Umgebungsluft. Durch die Verwendung eines Lasers, dessen Licht für eines der beiden Materialien transparent ist, kann die Grenzfläche zwischen den beiden Materialien geheizt werden. Konkret wird ein Verfahren zum Fügen von LiNbO₃ mit Si beschrieben, wobei ein Laser mit einer Laserwellenlänge im grünen Wellenlängenbereich (bei 532 nm) eingesetzt wird, bei der fast keine Absorption in LiNbO₃ erfolgt. Die Pulsdauer der Laserpulse liegt bei 4 ns, die Pulswiederholfrequenz bei 10 Hz.

In dem Artikel ist auch beschrieben, dass die Bindungsstärke der Fügeverbindung von der Fluenz der Laserstrahlung abhängig ist: Bei einer zu geringen Fluenz überschreitet das Si-Material an der Grenzfläche den Schmelzpunkt nicht und wird nicht aufgeschmolzen, bei einer zu großen Fluenz überschreitet das Si-Material den Siedepunkt und es kommt zur Ablation. Es wurde festgestellt, dass bei einer Laser-Fluenz von ca. 0,5 J/cm² eine Bindungsstärke an der Grenzfläche von mehr als 2 MPa erzeugt werden kann.

Für die Herstellung von Wellenleitern ist es günstig, wenn der optische Kristall, der z.B. aus Litihumniobat gebildet sein kann, auf einen Isolator bzw. auf eine Isolator-Schicht aufgebracht wird, was im Fall von Lithiumniobat als Lithiumniobat-on-Insulator (LNOI) bezeichnet wird.

In dem Artikel "Lithium Niobate-On-Insulator (LNOI): Status and Perspectives", H. Hu et al., Proc. SPIE, Vol. 8431, 84311D ist ein Wafer aus LNOI beschrieben, bei dem eine einkristalline Schicht aus Lithiumniobat und eine Isolator-Schicht aus SiO₂, die durch Implantation von He-Ionen gebildet wird, durch Fügen miteinander verbunden werden. Die Isolator-Schicht aus SiO₂ ist auf einem Lithiumniobat-Substrat aufgebracht. Für das Fügen wird zunächst an einem weiteren Substrat eine Schicht aus Lithiumniobat gebildet. Die beiden Substrate werden dann miteinander in Kontakt gebracht (Direktes-Wafer-Bonden) und einem Temperprozess unterworfen, bei dem sich das weitere Substrat durch Ionen-Slicing von der Schicht aus Lithiumniobat ablöst.

In dem Artikel "Lithium niobate on insulator (LNOI) for micro-photonic devices", G. Poberaj et al., Laser Photonics Rev., 1-16 (2012) wird ein Verfahren vorgeschlagen, bei dem das Fügen der beiden Substrate ebenfalls durch direktes Wafer-Bonden bei erhöhten Temperaturen oder durch die Verwendung von adhesiven Polymeren (Benzocyclobuten) erfolgt.

Auch in dem Artikel "Compact electric field sensors based on indirect bonding of lithium niobate to silicon microrings", L. Chen et al., Optics Express 20, Nr. 4, 4032, wird eine Polymerschicht aus Benzocyclobuten zum Fügen von Lithiumniobat auf ein Siliziumsubstrat verwendet.

Ein weiterer Ansatz besteht in der Verwendung einer metallischen Schicht, beispielsweise einer Gold-Schicht, zum Erzeugen einer starken Verbindung zwischen dem Lithiumniobat und dem Substrat bei dem Fügeprozess, vgl. den Artikel "Second harmonic generation in periodically-poled thin film lithium niobate waferbonded on silicon", A. Rao et al., Optics Express 24, Nr. 26, 29941.

In dem Artikel "Room-temperature bonding of lithium niobate and silicon wafers by argon-beam surface activation", H. Takagi et al., Applied Pysics Letters Vol. 74, No. 16, 2387-2389, in dem Artikel "Room-temperature wafer bonding of silicon and lithium niobate by means of argon-beam surface activation", H. Takagi et all, Integrated Ferroelectrics, 2002, Vol. 50, pp 53-59, sowie in dem Artikel "Room temperature bonding of silicon and lithium niobate", M.M.R. Howlader et al, Applied Physics Letters 89, 031914 (2006) ist das Herstellen von Lithiumniobat/Silizium-Wafern bei Raumtemperatur mit Hilfe einer Oberflächenaktivierung, beispielsweise durch einen Ar-Ionenstrahl, beschrieben.

In dem Artikel "Fabrication of Thick Periodically-poled Lithium Niobate Crystals by Standard Electric Field Poling and Direct Bonding", B. J. Kim et al., Journal of the Optical Society of Korea, Vol. 14, No. 4, Dezember 2010, pp. 420-423 ist beschrieben, dass zwei periodisch gepolte Lithiumniobat-Kristalle durch Direkt-Bonden miteinander verbunden werden können.

In der DE 10 2013 211 977 B3 ist eine Festkörperlaseranordnung beschrieben, die einen laseraktiven Festkörper und eine thermisch mit dem Festkörper gekoppelte Wärmesenke aufweist, wobei der laseraktive Festkörper und/oder die Wärmesenke eine für Laserschweißstrahlung transparente Komponente ist. Der Festkörper und die Wärmesenke sind durch die transparente Komponente hindurch über mindestens eine Schweißstelle laserverschweißt, wobei für die Laserverschweißung Ultrakurzpuls-Laserstrahlung verwendet wird. Die mindestens eine Schweißstelle ist ausschließlich außerhalb eines im Laserbetrieb gepumpten Pumpbereichs des Festkörpers angeordnet.

In der US 2015/0027168 A1 ist ein Verfahren zum Bonden eines Werkstücks beschrieben. Bei dem Verfahren wird an der Oberfläche eines ersten Substrats eine anorganische Schicht gebildet, das Werkstück wird zwischen dem ersten Substrat und dem zweiten Substrat angeordnet, wobei die Schicht in Kontakt mit dem zweiten Substrat ist, und das Werkstück wird zwischen dem ersten Substrat und dem zweiten Substrat durch lokales Aufheizen der Schicht gebondet, indem die Schicht mit Laserstrahlung mit einer vorgegebenen Wellenlänge bestrahlt wird. Die anorganische Schicht, das erste Substrat oder das zweite Substrat sind für Wellenlängen zwischen ca. 420 nm und ca. 720 nm transmittierend.

### Aufgabe der Erfindung

Der Erfindung liegt die Aufgabe zugrunde, ein Verfahren zum Verbinden eines optischen Kristalls, insbesondere eines nichtlinearen optischen Kristalls, mit einem Substrat bereitzustellen, bei dem die Verbindung verbesserte Eigenschaften, insbesondere eine hohe Bruchfestigkeit, aufweist.

### Gegenstand der Erfindung

Ein Verfahren zum Verbinden eines optischen Kristalls mit einem Substrat entsprechend einem ersten Aspekt der Erfindung ist im Anspruch 1 definiert.

Im Sinne dieser Anmeldung wird unter einem "optischen Kristall" ein Kristall verstanden, dessen Materialeigenschaften eine Nutzung für optische Anwendungen ermöglichen, beispielsweise zur Führung von Strahlung in einem optischen Wellenleiter. Insbesondere kann es sich bei dem optischen Kristall um einen nichtlinearen optischen Kristall handeln. Manche (nichtlineare) optische Kristalle, beispielsweise Lithiumniobat, weisen piezoelektrische Eigenschaften auf und können aufgrund dieser Eigenschaften auch für Hochfrequenzanwendungen im kHz-, MHz- oder GHz-Bereich eingesetzt werden.

Bei der Oberfläche der Zwischenschicht, auf die der Laserstrahl eingestrahlt wird, handelt es sich typischerweise um die dem optischen Kristall zugewandte Oberfläche, falls der Laserstrahl durch den optischen Kristall eingestrahlt wird. Für den Fall, dass der Laserstrahl durch das Substrat auf die Zwischenschicht eingestrahlt wird, handelt es sich bei der bestrahlten Oberfläche typsicherweise um die dem Substrat zugewandte Oberfläche der Zwischenschicht. Für das Einstrahlen des gepulsten Laserstrahls auf die Zwischenschicht bzw. auf die Oberfläche der Zwischenschicht ist es typischerweise erforderlich, dass das Material des optischen Kristalls oder des Substrats, durch das die Einstrahlung erfolgt, für die Wellenlänge des eingestrahlten Laserstrahls transparent ist.

Der auf die Oberfläche der Zwischenschicht eingestrahlte Laserstrahl muss nicht zwingend auf die Oberfläche der Zwischenschicht fokussiert werden. In der Regel wird der Laserstrahl aber in der Nähe der Oberfläche der Zwischenschicht fokussiert. Die Fokuslage kann typischerweise um eine Wegstrecke, die bis zum ca. 10-Fachen der Rayleigh-Länge eines Gauß-Strahls beträgt, in Dickenrichtung des Substrats bzw. des optischen Kristalls von der bestrahlten Oberfläche der Zwischenschicht abweichen. Für den Fall, dass der Laserstrahl ein quasi-nichtbeugendes Strahlprofil aufweist, wird eine langgestreckte Fokuszone in Dickenrichtung gebildet, die sich ggf. über die gesamte Dicke der Zwischenschicht erstrecken kann.

Bei den meisten der weiter oben beschriebenen Fügeverfahren besteht das Problem, dass diese bei erhöhten Temperaturen durchgeführt werden müssen. Die in der Regel großen Unterschiede der thermischen Ausdehnungskoeffizienten der als Fügepartner dienenden Materialien führen dabei häufig zu einer Delamination bis hin zu einer vollständigen Zerstörung eines der Materialien. Durch einen Laserschweißprozess kann diese Problematik vermieden werden, weil die Materialbearbeitung lokal erfolgt und daher nur lokal erhöhte Temperaturen auftreten.

Es hat sich gezeigt, dass bei einem solchen Laserschweißprozess die Bruchfestigkeit der Verbindung zwischen dem optischen Kristall und dem Substrat durch die Zwischenschicht verbessert werden kann: Die Schmelzzone wird in diesem Fall nicht nur an der Oberfläche des Substrats bzw. des optischen Kristalls, sondern auch in der Zwischenschicht gebildet. Dabei wird in der Regel das Material der Zwischenschicht aufgeschmolzen. Bei einer geeigneten Wahl des Materials der Zwischenschicht kann daher die Bruchfestigkeit der Verbindung verbessert werden. Zudem können die Materialeigenschaften der Zwischenschicht bei deren Herstellung üblicherweise leichter beeinflusst werden als dies bei der Herstellung des Substrats selbst der Fall ist, so dass die Bruchfestigkeit sowie andere Eigenschaften der Verbindung leichter beeinflusst werden können.

Bei einer Variante des Verfahrens ist die Zwischenschicht aus einem dielektrischen Material gebildet. Die Verwendung einer Zwischenschicht aus einem dielektrischen, nicht bzw. nur schwach elektrisch leidenden Material ist günstig, da ein solches Material bei der Herstellung von Wellenleitern oder dergleichen in dem optischen Kristall eine Isolator-Schicht bildet. Eine solche Isolator-Schicht ermöglicht es, eine Brechungsindexstruktur zur planaren Wellenleitung zu bilden, die ein vertikales Confinement des in dem Wellenleiter geführten Lichts erzeugt.

Die Zwischenschicht kann daher sowohl die Bruchfestigkeit der Verbindung verbessern als auch die für die Wellenleiterstruktur günstige bzw. erforderliche

Brechungsindexvariation erzeugen. Die Herstellung von Wellenleiterstrukturen in einem optischen Kristall kann beispielsweise durch Laserablation erfolgen, insbesondere unter Verwendung von Ultrakurzpuls-Laserstrahlung, wie dies in der DE 10 2019 214 684.8 beschrieben ist.

Bei einer weiteren Variante ist das Material der Zwischenschicht ausgewählt ist aus der Gruppe umfassend: SiO₂, Si₃N₄, TiN, SiC, III-V-Verbindungshalbleiter und Legierungen davon. Bei diesen Materialien handelt es sich um Dielektrika bzw. um Halbleiter, die als Isolator-Schicht bzw. zur Erzeugung einer BrechungsindexVariation für die Herstellung von Wellenleiterstrukturen oder anderen Mikrostrukturen in dem optischen Kristall verwendet werden können. Bei den III-V-Verbindungshalbleitern kann es sich um Nitride, Phosphide, Arsenide oder Antimonide handeln.

Bei einer weiteren Variante wird die Zwischenschicht vor dem Verbinden auf dem Substrat und/oder auf dem optischen Kristall abgeschieden. Die Zwischenschicht kann durch einen herkömmlichen Beschichtungsprozess, d.h. üblicherweise durch Abscheidung aus der Gasphase (PVD, CVD, etc.), auf dem Substrat abgeschieden werden. Auch eine Abscheidung der Zwischenschicht durch epitaktisches Wachstum ist möglich. Beispielsweise erfolgt das Abscheiden einer Zwischenschicht aus einem III-V-Verbindungshalbleiter typischerweise durch epitaktisches Wachstum. Durch die Abscheidung der Zwischenschicht auf dem Substrat ist es nicht erforderlich, eine zusätzliche Fügeverbindung zwischen dem Substrat und der Zwischenschicht herzustellen.

Bei einer weiteren Variante weist die Zwischenschicht eine Dicke zwischen 1 nm und 50 µm, bevorzugt zwischen 400 nm und 5 µm, auf. Eine Zwischenschicht mit einer solchen Dicke kann mit Hilfe der weiter oben beschriebenen Beschichtungs-Verfahren mit vergleichsweise geringem Aufwand aufgebracht werden. Für optische Anwendungen liegt die Schichtdicke der Zwischenschicht typischerweise im Bereich zwischen 400 nm und 5 µm.

Grundsätzlich ist es alternativ auch möglich, die Zwischenschicht durch eine Umwandlung des Materials des Substrats zu erzeugen, beispielsweise indem in das Material des Substrats in einem oberflächennahen Volumenbereich Ionen implantiert werden oder indem die Materialumwandlung beispielsweise mittels thermischer Oxidation durchgeführt wird. Die Zwischenschicht kann ggf. auch eine native Oxidschicht bilden, die sich an der Oberfläche des Substrats beim Kontakt mit der Umgebungsluft ausbildet, sofern keine Maßnahmen zur Verhinderung der Oxidation getroffen werden.

Bei dem Material des Substrats kann es sich beispielsweise um Silizium handeln, aber auch um ein anderes Material, das sich zum Aufbringen der Zwischenschicht eignet, z.B. um einen optischen Kristall oder um ein Glas-Material, z.B. um Borosilikat-Glas. Es versteht sich, dass die Zwischenschicht nicht zwingend unmittelbar auf das Substrat aufgebracht werden muss, sondern dass ggf. zwischen der Zwischenschicht und dem Substrat andere Schichten angeordnet sein können, die beispielsweise als Haftvermittlerschicht oder dergleichen dienen.

Bei einer weiteren Variante ist der optische Kristall ausgewählt aus der Gruppe umfassend: Lithiumniobat (LiNbO₃), Lithiumtantalat (LiTaO₃), Kaliumtitanylphosphat (KTP) und Diamant. Die nichtlinearen Kristalle LiNbO₃, LiTaO₃ und KTP sowie Diamant können nach dem Fügen zur Herstellung von Wellenleiterstrukturen oder von anderen Mikrostrukturen dienen. Es versteht sich, dass das Verfahren auch bei anderen als den genannten Materialien durchgeführt werden kann.

Beim Bestrahlen der Oberfläche wird der gepulste Laserstrahl auf bzw. in die Nähe der Oberfläche der Zwischenschicht fokussiert und bildet einen Einflussbereich bzw. eine Fokuszone, welcher der Schmelzzone entspricht, an der eine lokale, stoffschlüssige Verbindung zwischen dem optischen Kristall und der Zwischenschicht und somit dem Substrat gebildet wird. Die vertikale Ausdehnung der Fokuszone bzw. der Schmelzzone (in Dickenrichtung des Substrats) und auch die laterale Ausdehnung der Fokus- bzw. Schmelzzone (senkrecht zur Dickenrichtung des Substrats) können über unterschiedliche Laserparameter wie Laserwellenlänge, Pulsdauer, Pulsrepetitionsrate, mittlere Laserleistung und/oder Strahlformung gezielt eingestellt werden, um die Eigenschaften der stoffschlüssigen Verbindung, insbesondere deren Bruchfestigkeit, zu beeinflussen bzw. zu optimieren. Nachfolgend werden geeignete Bereiche angegeben, in denen die Laserparameter variiert werden können, um die Eigenschaften der stoffschlüssigen Verbindung einzustellen.

Bei einer weiteren Variante erfolgt das Bestrahlen mit einem Laserstahl mit einer Wellenlänge von mehr als 800 nm, bevorzugt von mehr als 1000 nm. Es hat sich gezeigt, dass die Verwendung von Laserstrahlung bei Wellenlängen im IR-Wellenlängenbereich für die vorliegende Anwendung gut geeignet ist. Der Laserstrahl bzw. die Laserstrahlung kann beispielsweise mittels eines Festkörperlasers, z.B. mit einer Wellenlänge von 1030 nm, erzeugt werden. Die von dem Laser erzeugte Laserstrahlung wird mit Hilfe einer geeigneten strahlformenden Optik, die zur Einstellung der Fokuslage und ggf. der Form der Fokuszone ausgebildet ist, zu einem Bearbeitungs-Laserstrahl geformt. Grundsätzlich kann auch Laserstrahlung bei anderen Wellenlängen, beispielsweise im sichtbaren Wellenlängenbereich, für die Durchführung des Verfahrens verwendet werden. Wesentlich ist, dass entweder das Material des optischen Kristalls und/oder des Substrats bei der Laser-Wellenlänge transparent ist. Das jeweils andere Material absorbiert typischerweise die Laserstrahlung bei der Laser-Wellenlänge.

Bei einer weiteren Variante wird der gepulste Laserstrahl mit einer Pulsdauer zwischen 0,1 ps und 20 ps, bevorzugt zwischen 0,1 ps und 2 ps, auf die Oberfläche eingestrahlt. Es hat sich gezeigt, dass insbesondere die Pulsdauer einen erheblichen Einfluss auf die Bruchfestigkeit der Verbindung hat. Eine Pulsdauer der Laserpulse in der Größenordnung von Pikosekunden hat sich für die Bruchfestigkeit der stoffschlüssigen Verbindung als besonders günstig erwiesen. Unter der Pulsdauer der Laserpulse wird die zeitliche Breite bei der Hälfte der maximalen Lichtleistung in einem einzelnen Laserpuls verstanden.

Bei einer weiteren Variante wird das Bestrahlen mit einem Laserstrahl mit einer mittleren Laserleistung zwischen 0,1 W und 20 W, bevorzugt zwischen 1 W und 15 W, durchgeführt. Unter der mittleren Laserleistung wird das Produkt aus der Pulsenergie (der zeitlich aufintegrierten Peak-Leistung eines einzelnen Laserpulses) und der Repetitionsrate der Laserpulse im kontinuierlichen Betrieb, z.B. in der Größenordnung von mehr als 1 MHz bzw. im Burst-Betrieb der Wiederholrate der Bursts, z.B. in der Größenordnung von 10 kHz, multipliziert mit der Pulsanzahl innerhalb eines Bursts verstanden.

Der gepulste Laserstrahl kann ein Gauß-förmiges Strahlprofil aufweisen, es ist aber auch möglich, dass der Laserstrahl eine andere Art von Strahlprofil aufweist. Bevorzugt wir der Laserstrahl mit einem quasi-nichtbeugenden Strahlprofil, insbesondere mit einem Bessel-ähnlichen Strahlprofil, auf die Zwischenschicht eingestrahlt.

Ein nicht-beugender Strahl stellt eine Lösung der Helmholtz-Gleichung dar, die in einen longitudinalen Anteil und in einen transversalen Anteil separierbar ist. Ein solcher nicht-beugender Strahl weist ein transversales Strahlprofil auf, das propagationsinvariant ist, d.h. das sich bei der Propagation des nicht-beugenden Strahls nicht verändert. Abhängig vom verwendeten Koordinatensystem treten unterschiedliche Lösungsklassen von nicht-beugenden Strahlen auf, beispielsweise Mathieu-Strahlen in ellitpisch-zylindrischen Koordinaten oder Bessel-Strahlen in zirkular-zylindrischen Koordinaten.

Ein nicht-beugender Strahl stellt ein theoretisches Konstrukt dar, das sich in guter Näherung in Form von so genannten quasi-nichtbeugenden Strahlen realisieren lässt. Ein quasi-nichtbeugender Strahl weist die Propagationsinvarianz nur über eine endliche Länge (charakteristische Länge) L auf. Ein quasi-nichtbeugender Strahl liegt genau dann vor, wenn bei ähnlichem bzw. identischem Fokusdurchmesser die charakteristische Länge L die Rayleighlänge des zugehörigen Gaußfokus deutlich überragt, insbesondere wenn gilt: L > z_{R}, wobei z_{R} die Rayleigh-Länge des Gauß-Strahls bezeichnet. Die charakteristische Länge L kann z.B. in der Größenordnung von 1 mm oder darüber liegen.

Eine Untermenge der quasi-nichtbeugenden Strahlen stellen die Bessel-ähnlichen Strahlen dar, bei denen das transversale Strahlprofil in der Nähe der optischen Achse in guter Näherung einer Bessel-Funktion erster Art der Ordnung n entspricht. Eine Untermenge der Bessel-ähnlichen Strahlen stellen die Bessel-Gauß-Strahlen dar, bei denen das transversale Strahlprofil in der Nähe der optischen Achse in guter Näherung einer Bessel-Funktion erster Art der 0. Ordnung entspricht, die von einer Gauß-Verteilung eingehüllt ist.

Die Verwendung eines quasi-nichtbeugenden Strahlprofils hat sich für die vorliegende Anwendung als vorteilhaft herausgestellt, da bei einem solchen Strahlprofil in longitudinaler Richtung über eine vergleichsweise lange Distanz ein im Wesentlichen homogenes Strahlprofil aufrecht erhalten werden kann, wodurch das Material im Bereich der Zwischenschicht homogen aufgeschmolzen werden kann.

Für die Erzeugung des quasi-nichtbeugenden Strahlprofils wird eine geeignete strahlformende Optik verwendet. Als besonders vorteilhaft für die vorliegende Anwendung hat sich ein Bessel-ähnlicher Strahl herausgestellt, ggf. können aber auch andere quasi-nichtbeugende Strahlprofile, z.B. ein Airy-Strahlprofil, ein Weber-Strahlprofil oder ein Mathieu-Strahlprofil mit der strahlformenden Optik erzeugt werden. Die strahlformende Optik kann insbesondere ausgebildet sein, ein quasi-nichtbeugendes Strahlprofil mit einem zur Propagationsrichtung rotationssymmetrischen Strahlquerschnitt zu erzeugen, wie dies beispielsweise bei einem Bessel-Gauß-Strahl der Fall ist.

Bei einer weiteren Variante umfasst das Verfahren: Ausbilden einer durchgängigen oder unterbrochenen Schweißnaht entlang der Zwischenschicht durch Bewegen des gepulsten Laserstrahls und des optischen Kristalls relativ zueinander entlang einer Vorschubrichtung. Durch die Relativbewegung des gepulsten Laserstrahls und des Substrats erfolgt eine laterale Bewegung der Fokuszone (Spot) bzw. der Schmelzzone entlang der Oberfläche bzw. entlang der Zwischenschicht mit einer definierten Vorschubgeschwindigkeit. Auf diese Weise können Schweißnähte erzeugt werden, wodurch großflächige Werkstücke (auf Wafer-Ebene) gefügt werden können. Die Schweißnaht kann durchgängig oder unterbrochen ausgebildet werden. Die Verwendung einer durchgängigen Schweißnaht ist beispielsweise günstig, wenn mit dem Verfahren eine hermetische Abdichtung von Kavitäten hergestellt werden soll. Ist eine hermetische Abdichtung nicht erforderlich, kann die Schweißnaht unterbrochen ausgebildet werden, um die Prozesszeit für den Fügeprozess zu reduzieren.

Die Vorschubrichtung und somit die Richtung der Schweißnaht kann abschnittsweise konstant sein, so dass geradlinige Abschnitte gebildet werden, es ist aber auch möglich, dass die Vorschubrichtung ortsabhängig variiert und eine krummlinige Schweißnaht gebildet wird. Die Bewegung des Laserstrahls kann mit Hilfe einer geeigneten Optik, beispielsweise mit Hilfe einer Scanner-Optik, erfolgen. In der Regel ist es günstig, wenn das Substrat und der optische Kristall, die entlang der Oberfläche miteinander verbunden werden sollen, beim Verbinden ortsfest bleiben. Grundsätzlich ist es aber auch möglich, das Substrat und den optischen Kristall beim Verbinden gemeinsam zu verschieben. Zur Vermeidung einer Relativbewegung in lateraler Richtung zwischen dem Substrat und dem optischen Kristall ist es in diesem Fall erforderlich, diese in einer geeigneten Halterung aufzunehmen.

Mit dem oben beschriebenen Verfahren kann eine selektive Füge-Verbindung zwischen dem optischen Kristall und dem Substrat auf Chip-Ebene hergestellt werden, wobei auch Materialien mit stark unterschiedlichen thermischen Ausdehnungskoeffizienten miteinander verbunden werden können. Dadurch ist es möglich, optische Kristalle auf Materialien mit einem stark unterschiedlichen Brechungsindex zu fügen und Chips für die Herstellung von Wellenleitern mit großen Brechungsindex-Unterschieden zwischen Kern und Mantel auf Chip-Ebene vorzubereiten. Zudem besteht die Möglichkeit, elektrische und optische Schaltungen auf zwei Substraten zu kombinieren und hybride Mikrosysteme wie Magnetometer, Interferometer, Zufallszahlengeneratoren oder optische Quantencomputer herzustellen. Das hier beschriebene Fügeverfahren kann als Vorbearbeitungs-Verfahren für sich anschließende Prozesse dienen, beispielweise für das Herstellen von Wellenleitern oder das hermetische Abschließen von Kavitäten.

Das Bilden des Wellenleiters durch Materialabtrag kann beispielsweise durch Laserablation erfolgen, insbesondere unter Verwendung von Ultrakurzpuls-Laserstrahlung, wie dies in der DE 10 2019 214 684.8 beschrieben ist. Bei einer solchen Wellenleiterstruktur ist eine Zwischenschicht in Form einer dielektrischen Schicht in der Regel zwingend erforderlich, damit das Licht ausschließlich im Wellenleiter selbst geführt wird. Die mindestens eine Schweißnaht, die zum Verbinden des optischen Kristalls mit dem Substrat verwendet wird, ist bevorzugt außerhalb der Wellenleiterstruktur bzw. außerhalb des Wellenleiters angeordnet, um eine in der Regel ungünstige Beeinflussung des Wellenleiters, genauer gesagt der Leitung von Licht durch den Wellenleiter, zu vermeiden.

Bei einer weiteren Variante umfasst das Verfahren: Strukturieren einer Oberfläche des optischen Kristalls, bevorzugt nach dem Verbinden, zum Bilden von elektrischen, akustischen und/oder optischen Mikrobauelementen, bevorzugt von Filtern oder von Antennen, insbesondere für die Hochfrequenztechnologie. Das Strukturieren der Oberfläche kann beispielsweise mit Hilfe eines fotolithographischen Verfahrens erfolgen, bei dem eine strukturierte Metallschicht auf die Oberfläche des optischen Kristalls aufgebracht wird, welche die Mikrobauelemente oder einen Teil der Mikrobauelemente bildet. In der Regel erfolgt das Strukturieren der Oberfläche des optischen Kristalls erst nach dem Verbinden mit dem Substrat, ggf. ist dies jedoch auch schon vor dem Verbinden möglich.

Bei den akustischen Bauelementen kann es sich beispielsweise um akustische Oberflächenwellen-Bauelemente für die Hochfrequenztechnologie (im Mikrowellen- bzw. GHz-Bereich) handeln, z.B. für den Mobilfunk, beispielsweise um Oberflächenwellen-Filter, um Antennen, Interdigitalwandler, Impedanzwandler, Reflektoren, etc. Derartige akustische Oberflächenwellen-Bauelemente z.B. in Form von Oberflächenwellen-Filtern können Mikrobauelemente z.B. in Form von kammartig ineinandergreifenden Elektroden ("Fingern") aufweisen, die auf die Oberfläche des Kristalls aufgebracht sind. Für die Erzeugung der Oberflächenwellen wird der piezoelektrische Effekt in dem optischen Kristall genutzt, bei dem es sich in diesem Fall z.B. um Lithiumniobat handeln kann. Beim Strukturieren der Oberfläche wird in diesem Fall in der Regel (metallisches) Material auf der ansonsten planen Oberfläche des Kristalls abgeschieden und geeignet strukturiert, aber kein Material von der Oberfläche abgetragen. Unter freistehenden Mikrostrukturen werden Mikrostrukturen an dem Kristall verstanden, die zumindest einen Bereich aufweisen, der in Dickenrichtung nicht direkt mit dem Substrat verbunden ist, weil die Zwischenschicht fehlt, oder die in lateraler Richtung vom restlichen Kristall beabstandet sind.

Zur Herstellung von lateral freistehenden Mikrostrukturen kann ein selektiver Schweißprozess zwischen dem Kristall und dem Substrat durchgeführt werden, wie er weiter oben beschrieben wurde. Auf diese Weise kann erreicht werden, dass nicht das gesamte zu entfernende Material um eine freistehende Mikrostruktur herum durch selektives Ätzen oder Laserabtrag wieder entfernt werden muss, da nichtverschweißte Bereiche aus dem Kristall entnommen werden können, wenn der selektive Abtrag entlang einer geeigneten Abtragskontur erfolgt. Dies ist beispielsweise günstig, um Phasenschieber oder Strahlteiler herzustellen, die im optisch sensitiven Bereich keine Verspannungen durch den Fügeprozess zwischen Substrat und Kristall aufweisen.

Zur Herstellung von freistehenden Mikrostrukturen, die in Dickenrichtung von dem Substrat beabstandet sind, wird typischerweise selektiv die Zwischenschicht entfernt. Auf diese Weise können mikromechanische Mikrostrukturen gebildet werden, die im Fall von Lithiumniobat als Kristall-Material aufgrund des piezoelektrischen Effekts ggf. bewegt werden können und in diesem Fall MEMS-Systeme bilden. Zusätzlich können beispielsweise optische Flüstergallerie-Resonatoren in Dickenrichtung vom Substrat getrennt werden, um somit die Umlaufverluste der geführten Moden zu reduzieren. Das Entfernen der Zwischenschicht kann z.B. durch Ätzen oder durch einen Laserabtrag vor dem Ausbilden der mindestens einen Schweißnaht erfolgen. Die Strukturierung der Zwischenschicht kann bei deren Herstellung bzw. bei deren Abscheidung auf dem Kristall erzeugt werden, durch einen Ätzprozess eingebracht werden, oder durch einen Laserabtrag erzeugt werden. Die spätere Verschweißung des Kristalls mit dem Substrat erfolgt durch die Herstellung selektiver Schweißnähte in einem Bereich, in dem die Zwischenschicht aufgebracht ist. Nach dem Fügen ist eine Unterätzung der lateral freistehenden Strukturen möglich, so dass diese auch in Dickenrichtung freistehend werden. Beim Ätzprozess wird die Zwischenschicht entfernt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Vorrichtung zum Verbinden eines optischen Kristalls mit einem Substrat durch Einstrahlen eines gepulsten Laserstrahls auf eine Oberfläche einer zwischen dem optischen Kristall und dem Substrat gebildeten Zwischenschicht,
- Fig. 2: ein optisches Bauelement in Form eines optischen Wellenleiters, der durch nachträglichen Materialabtrag an dem optischen Kristall gebildet wurde.
In der folgenden Beschreibung der Zeichnungen werden für gleiche bzw. funktionsgleiche Bauteile identische Bezugszeichen verwendet.

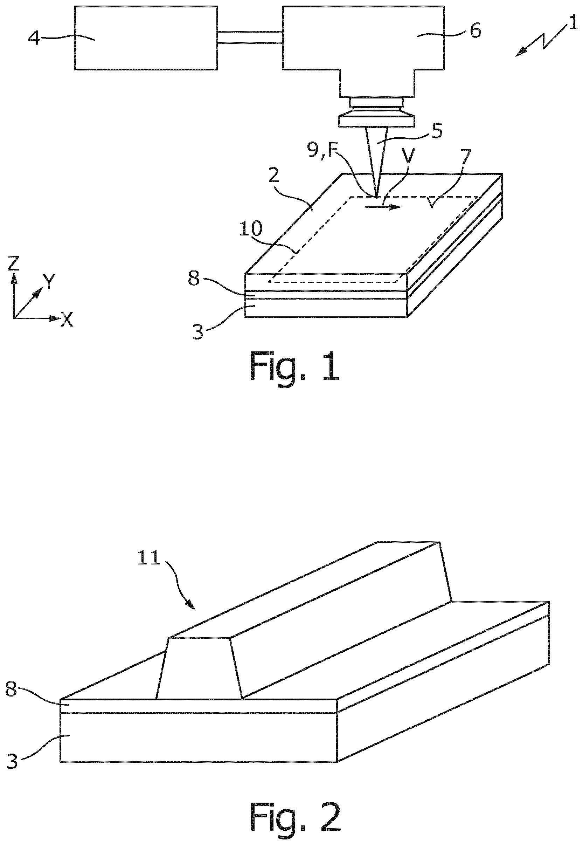

**Fig. 1** zeigt einen beispielhaften Aufbau einer Vorrichtung 1 zur Durchführung eines Verfahrens zum Verbinden eines optischen Kristalls 2, z.B. in Form eines Wafers, mit einem (Träger-)Substrat 3, das ebenfalls in Form eines Wafers vorliegt. Der optische Kristall 2 wurde vor der Durchführung des Verfahrens auf dem Substrat 3 positioniert.

Die Vorrichtung 1 umfasst eine Laserquelle 4 zur Erzeugung eines Laserstrahls 5, der einer in einen Laserbearbeitungskopf 6 integrierten Optik zugeführt wird. Bei der Laserquelle 4 handelt es sich bei dem in Fig. 1 gezeigten Beispiel um einen Festkörperlaser, der zur Erzeugung des Laserstrahls 5 bei einer Wellenlänge λ_{L} im IR-Wellenlängenbereich, genauer gesagt bei 1030 nm, ausgebildet ist. Die Verwendung einer Laserquelle 4, die zur Erzeugung eines Laserstrahls 5 bei einer anderen Wellenlänge λ_{L}, z.B. bei mehr als 800 nm, mehr als 1000 nm oder im sichtbaren Wellenlängenbereich, ausgebildet ist, ist ebenfalls möglich.

Der Laserbearbeitungskopf 6 dient der Umlenkung und Ausrichtung des Laserstrahls 5 auf den optischen Kristall 2. Der Laserbearbeitungskopf 6 verfügt auch über eine Fokussieroptik, um den Laserstrahl 5 auf den optischen Kristall 2, genauer gesagt auf eine dem optischen Kristall 2 zugewandte Oberfläche 7 einer (funktionellen) Zwischenschicht 8 einzustrahlen bzw. zu fokussieren, die zwischen dem optischen Kristall 2 und dem Substrat 3 gebildet ist. Die Zwischenschicht 8 ermöglicht es, die optischen und/oder mechanischen Eigenschaften des Stapels einzustellen, der beim Verbinden des optischen Kristalls 2 mit dem Substrat 3 entsteht. Insbesondere ermöglicht es die Zwischenschicht 8, genauer gesagt deren physikalischen Eigenschaften (Material, Dicke, etc.), die Bruchfestigkeit des optischen Kristalls 2 auf dem Substrat 3 zu verbessern, wie weiter unten näher beschrieben wird.

Das Einstrahlen des Laserstrahls 5 erfolgt in Fig. 1 durch den optischen Kristall 2 hindurch, d.h. der optische Kristall 2 ist transparent für die Wellenlänge λ_{L} des Laserstrahls 5. Dies gilt jedoch nicht für das Material der Zwischenschicht 8 und für das Material des Substrats 3, die den Laserstrahl 5 jeweils absorbieren. Die Absorption des Laserstrahls 5 führt dazu, dass sich das Material der Zwischenschicht 8 sowie des optischen Kristalls 2 und ggf. des Substrats 3 erwärmt. An einer Fokusposition F des Laserstrahls 5 an bzw. in der Nähe der Oberfläche 7 bildet sich durch die Erwärmung eine Schmelzzone 9 aus. Die Schmelzzone 9 führt nach dem Erkalten dazu, dass sich der optische Kristall 2 mit der Zwischenschicht 8 und somit mit dem Substrat 3 (lokal) stoffschlüssig verbindet.

Bei dem in Fig. 1 gezeigten Beispiel handelt es sich bei dem optischen Kristall 2 um Lithiumniobat (LiNbO₃), bei dem Material des Substrats 3 um Silizium (Si) und bei dem Material der Zwischenschicht 8 um Siliziumoxid (SiO₂). Die Kristallorientierung des Lithiumniobats lag als so genannter z-Cut vor, die Verwendung von anderen Kristallorientierungen (z.B. x-Cut oder y-Cut) ist aber ebenfalls möglich.

Alternativ zur Fokussierung bzw. zum Einstrahlen des Laserstrahls 5 durch den optischen Kristall 2 hindurch auf die Zwischenschicht 8 ist es möglich, den Laserstrahl 5 durch das Substrat 3 hindurch auf eine dem Substrat 3 zugewandte Oberfläche der Zwischenschicht 8 einzustrahlen. In diesem Fall ist es erforderlich, dass das Substrat 3 für die Wellenlänge λ_{L} des Laserstrahls 5 transparent ist. Als Substrat 3 kann in diesem Fall beispielsweise ein Glas-Material verwendet werden.

Es versteht sich, dass auch optische Kristalle 2 aus anderen Materialien, z.B. Lithiumtantalat (LiTaO₃), Kaliumtitanylphosphat (KTP) oder Diamant auf die hier beschriebene Weise gefügt bzw. mit einem Substrat 3 verbunden werden können, bei dem es sich beispielsweise um Silizium, um ein Glas-Material oder ebenfalls um einen optischen Kristall handeln kann.

Wie weiter oben beschrieben wurde, können die Eigenschaften der Zwischenschicht 8 so gewählt werden, dass u.a. die Bruchfestigkeit des optischen Kristalls 2 auf dem Substrat 3 verbessert wird. Dies ist beispielsweise bei der weiter oben beschriebenen Zwischenschicht aus SiO₂ der Fall, welche bei dem optischen Kristall 2 aus Lithiumniobat die Bruchfestigkeit auf dem Substrat 3 aus Silizium erhöht.

Abhängig von den Materialien des optischen Kristalls 2 und des Substrats 3 kann ein geeignetes Material für die Zwischenschicht 8 ausgewählt werden, welches die Bruchfestigkeit der Verbindung gegenüber der direkten Verbindung des optischen Kristalls 2 mit dem Substrat 3 erhöht. Bei den Materialien, aus denen die Zwischenschicht 8 gebildet ist, kann es insbesondere um dielektrische Materialien handeln. Neben dem im hier beschriebenen Beispiel verwendeten SiO₂ kann es sich z.B. um Si₃N₄, TiN, SiC, III-V-Verbindungshalbleiter und Legierungen davon handeln.

Die Zwischenschicht 8 wird vor dem Verbinden mit dem optischen Kristall 2 auf das Substrat 3 und/oder auf dem optischen Kristall 2 abgeschieden. Für die Abscheidung können herkömmliche Beschichtungs-Verfahren zur Abscheidung aus der Gasphase (PVD, CVD, etc.) verwendet werden. Auch eine Abscheidung der Zwischenschicht 8 durch epitaktisches Wachstum ist möglich. Eine Dicke d der Zwischenschicht 8, die zwischen 1 nm und 50 µm liegt, hat sich sowohl für das Verbinden des optischen Kristalls 2 mit dem Substrat 3 als auch für die nachfolgende Verwendung des Verbunds aus optischem Kristall 2 und Substrat 3 als vorteilhaft erwiesen. Für optische Anwendungen liegt die Dicke d der Zwischenschicht 8 in der Regel im Bereich zwischen 400 nm und 5 µm.

Alternativ zur Abscheidung kann die Zwischenschicht 8 auch durch eine Veränderung des Materials des Substrats 3 und/oder des optischen Kristalls 2 gebildet werden, beispielsweise indem Ionen in einen oberflächennahen Volumenbereich implantiert werden. Auch kann ggf. eine native Oxidschicht, die sich beim Kontakt des Materials des Substrats 3 und/oder des optischen Kristalls 2 mit der Umgebungsluft bildet, als Zwischenschicht 8 dienen.

Neben der Zwischenschicht 8, insbesondere dem Material der Zwischenschicht 8, können auch die Parameter des Laserstrahls 5 (Laserparameter) die Eigenschaften, insbesondere die Bruchfestigkeit, der Verbindung zwischen dem optischen Kristall 2 und dem Substrat 3 beeinflussen bzw. verbessern. Die Laserparameter beeinflussen u.a. die Dimensionen des Schmelzzone 9 zwischen dem optischen Kristall 2 und dem Substrat 3, und zwar sowohl in horizontaler Richtung, d.h. parallel zu einer XY-Ebene eines XYZ-Koordinatensystems, in der die Oberfläche 7 der Zwischenschicht 8 verläuft, als auch in vertikaler Richtung (Z-Richtung), die der Dickenrichtung des optischen Kristalls 2 und des Substrats 3 entspricht.

Bei den Laserparametern, welche die Eigenschaften der Verbindung beeinflussen, handelt es sich u.a. um die Laser-Wellenlänge λ_{L}, um die Pulsdauer τ, um die Pulsrepetitionsrate im kontinuierlichen Betrieb bzw. um die Burst-Repetitionsrate und die Pulsanzahl im Burst im Burst-Betrieb, um die mittlere Laserleistung p sowie um die Strahlformung, insbesondere um das Strahl- bzw. Fokusprofil, des Laserstrahls 5. Nachfolgend werden geeignete Wertebereiche für die oben genannten Laserparameter angegeben.

Die Laserquelle 4 ist im gezeigten Beispiel ausgebildet, einen gepulsten Laserstrahl 5 mit Pulsdauern τ im ps-Bereich zu erzeugen. Für das hier beschriebene Verfahren haben sich Pulsdauern τ zwischen 0,1 ps und 20 ps, insbesondere zwischen 0,1 ps und 2 ps, z.B. von weniger als 1 ps, als günstig erwiesen.

Die Einstrahlung des gepulsten Laserstrahls 5 mit einer mittleren Leistung p zwischen 0,1 W und 20 W, insbesondere zwischen 1 W und 15 W, z.B. bei ca. 1,5 W, auf die Oberfläche 7 hat sich für die Bruchfestigkeit der Verbindung als günstig erwiesen. Gleiches gilt für die Pulsrepetitionsrate des gepulsten Laserstrahls 5, die für eine gute Bruchfestigkeit der Verbindung zwischen 200 kHz und 2 MHz, z.B. bei ca. 400 kHz, liegen sollte.

Bei dem in Fig. 1 gezeigten Beispiel weist der Laserstrahl 5 ein Gauß-förmiges Strahlprofil mit einem Rohstrahl-Durchmesser von ca. 3,6 mm auf. Es ist aber auch möglich, dass der Laserstrahl 5 eine andere Art von Strahlprofil aufweist, beispielsweise ein quasi-nichtbeugendes Strahlprofil, insbesondere ein Besselähnliches Strahlprofil. Bei einem solchen Strahlprofil wird in longitudinaler Richtung, d.h. in Dickenrichtung des optischen Kristalls 2 bzw. des Substrats 3 (Z-Richtung), über eine vergleichsweise lange Distanz ein im Wesentlichen homogenes Strahlprofil aufrechterhalten, wodurch eine in Dickenrichtung ausgedehnte Schmelzzone 9 erzeugt werden kann. Ein Laserstrahl 5 mit einem quasi-nichtbeugenden Strahlprofil kann durch eine geeignete strahlformende Optik (z.B. ein Axicon oder ein diffraktives optisches Element) erzeugt werden, die z.B. in den Laserbearbeitungskopf 6 integriert sein kann.

Durch eine Veränderung der Fokusposition F und somit der Schmelzzone 9 entlang der Oberfläche 7 kann eine durchgängige, d.h. kontinuierliche oder - wie in Fig. 1 dargestellt - eine unterbrochene Schweißnaht 10 hergestellt werden, um größere Flächen, z.B. in der Größenordnung der Fläche von Wafern, zu verbinden. Zur Veränderung der Fokusposition F wird bei dem in Fig. 1 gezeigten Beispiel eine Relativbewegung zwischen dem Laserstrahl 5 und dem optischen Kristall 2 (bzw. der Oberfläche 7 der Zwischenschicht 8) dadurch erreicht, dass der Laserstrahl 5 mit Hilfe einer in den Laserbearbeitungskopf 6 integrierten Scanner-Optik abgelenkt und über die Oberfläche 7 bewegt wird. Die Vorschubgeschwindigkeit v bei der Bewegung des Laserstrahls 5 über die Oberfläche 7 lag im gezeigten Beispiel bei ca. 5 mm/s, diese kann aber auch größer oder kleiner gewählt werden.

Durch das Ausbilden einer unterbrochenen Schweißnaht 10, wie sie in Fig. 1 dargestellt ist, kann die Prozesszeit des Füge- bzw. Verbindungsprozesses verkürzt werden. Für den Fall, dass eine geschlossene Kavität in dem optischen Kristall 2 gebildet und hermetisch abgedichtet werden soll, kann die in Fig. 1 gezeigte Schweißnaht 10 durchgehend, d.h. kontinuierlich ausgebildet werden.

Das hier beschriebene Füge- bzw. Verbindungsverfahren kann als Vorbearbeitungs-Verfahren für sich anschließende Prozesse dienen, beispielsweise für das weiter oben beschriebene Herstellen von geschlossenen Kavitäten oder für die Herstellung eines optischen Wellenleiters 11 z.B. in Form eines Stegwellenleiters, wie er beispielhaft in **Fig. 2** dargestellt ist. Das Herstellen des Wellenleiters 11 erfolgt durch selektives Abtragen des Materials des optischen Kristalls 2, nachdem dieser mit dem Substrat 3 bzw. mit der Zwischenschicht 8 verbunden wurde. Der Materialabtrag kann beispielsweise unter Verwendung von Ultrakurzpuls-Laserstrahlung erfolgen, wie dies in der DE 10 2019 214 684.8 beschrieben ist.

Falls die Schweißnaht 10 sich an der Unterseite des Wellenleiters 11 befindet bzw. mit diesem überlappt, kann dies zu unerwünschten Inhomogenitäten führen, welche die Führung von Licht in dem Wellenleiter 11 ungünstig beeinflussen. Es ist daher günstig, wenn der Wellenleiter 11 nicht mit der in Fig. 1 gezeigten Schweißnaht 10 überlappt, d.h. wenn dieser außerhalb der Schweißnaht 10 angeordnet ist.

Wie dies weiter oben beschrieben wurde, ermöglicht es die Zwischenschicht 8, die optischen und mechanischen Eigenschaften des Verbunds aus dem optischen Kristall 2 und dem Substrat 3 gezielt zu beeinflussen.

Für den Fall, dass in dem optischen Kristall 2 ein Wellenleiter 11 erzeugt werden soll, wie dies in Fig. 2 dargestellt ist, hat es sich als günstig erwiesen, wenn die Zwischenschicht 8 aus einem dielektrischen (Isolator-)Material gebildet ist. Ein solches Material weist typsicherweise einen erheblichen Unterschied im Brechungsindex gegenüber dem optischen Kristall 2 auf und ermöglicht es auf diese Weise, eine Brechungsindexstruktur zur planaren Wellenleitung zu bilden, die ein vertikales Confinement des in dem Wellenleiter 11 geführten Lichts erzeugt. Neben der Verbindung von Materialien mit stark unterschiedlichen Brechungsindizes können auch Materialien, die deutlich unterschiedliche thermische Ausdehnungskoeffizienten aufweisen, auf die weiter oben beschriebene Weise miteinander verbunden werden, ohne dass es zu Problemen während des Verbindens z.B. durch Delamination der Materialien bei einer Temperbehandlung kommt.

Mit Hilfe des weiter oben beschriebenen Verfahrens werden auch andere Mikrostrukturen als Wellenleiter 11 in dem optischen Kristall 2 hergestellt. Beispielsweise kann es sich hierbei um freistehende Mikrostrukturen handeln, zu deren Herstellung die Zwischenschicht 8 selektiv entfernt wird. Das selektive Entfernen erfolgt durch Ätzen oder durch einen Laserabtrag vor oder nach dem Ausbilden der mindestens einen weiter oben beschriebenen Schweißnaht 10 erfolgen. Beispielsweise kann in diesem Fall die Zwischenschicht 8 auf der Rückseite des optischen Kristalls 2 abgeschieden und selektiv in Teilbereichen mittels eines fotolithographischen Ätz-Verfahrens wieder entfernt werden. Das Verschweißen des optischen Kristalls 2 mit dem Substrat 3 erfolgt in diesem Fall selektiv nur in Teilbereichen, in denen die Zwischenschicht 8 nicht abgetragen wurde. Der bzw. die Teilbereich(e), in dem bzw. in denen die Zwischenschicht 8 entfernt wurde, bildet den freistehenden Bereich der jeweiligen Mikrostruktur.

Bei der jeweiligen freistehenden Mikrostruktur kann es sich im Fall von Lithiumniobat als Material des Kristalls 2 beispielsweise um eine MEMS-Komponente handeln, die durch Ausnutzung des piezoelektrischen Effekts bewegt werden kann. Auch eine freistehende Mikrostruktur in Form eines optischen Resonators, beispielsweise eines Flüstergalerie-Resonators, kann auf die weiter oben beschriebene Weise erzeugt werden.

Neben der Herstellung von optischen Mikrostrukturen, z.B. in Form von Wellenleitern 11 oder von anderen optischen Komponenten, die in der Regel einen Materialabtrag erfordert, ist es auch möglich, die Oberfläche des optischen Kristalls 2 zu strukturieren, beispielsweise indem auf diese eine strukturierte metallische Schicht aufgebracht wird, um elektrische, akustische und/oder optische Mikrobauelemente bzw. Mikrostrukturen zu bilden.

Derartige Mikrobauelemente können insbesondere für den Fall, dass der optische Kristall 2 aus einem piezoelektrischen Material wie z.B. aus Lithiumniobat gebildet ist, zur Herstellung von Mikrobauelementen für die Hochfrequenztechnologie, z.B. für den Mobilfunk, eingesetzt werden. Die piezoelektrischen Eigenschaften des optischen Kristalls 2 können in diesem Fall ausgenutzt werden, um an der Oberfläche des optischen Kristalls 2 Oberflächenwellen zu erzeugen. Auf diese Weise können akustische Oberflächenwellen-Bauelemente für die Hochfrequenztechnologie realisiert werden. Bei den akustischen Oberflächenwellen-Bauteilen kann es sich um Oberflächenwellen-Filter, um Antennen, Interdigitalwandler, Impedanzwandler, Reflektoren, etc. handeln.

## Patentansprüche

1. Verfahren zum Verbinden eines optischen Kristalls (2) mit einem Substrat (3), umfassend:
Einstrahlen eines gepulsten Laserstrahls (5) durch den optischen Kristall (2) oder
durch das Substrat (3) hindurch auf eine Oberfläche (7), die zwischen dem optischen Kristall (2) und dem Substrat (3) gebildet ist, zum stoffschlüssigen Verbinden des optischen Kristalls (2) mit dem Substrat (3) durch Ausbilden einer Schmelzzone (9),
wobei
zwischen dem optischen Kristall (2) und dem Substrat (3) eine Zwischenschicht (8) gebildet ist, und wobei der gepulste Laserstrahl (5) zum Ausbilden der Schmelzzone (9) auf die Oberfläche (7) der Zwischenschicht (8) eingestrahlt wird,
**gekennzeichnet durch**
Abtragen von Material von dem optischen Kristall (2) nach dem Verbinden zum Bilden mindestens eines Wellenleiters (11) an dem optischen Kristall (2) oder durch
Selektives Entfernen der Zwischenschicht (8) durch Ätzen vor oder nach dem Ausbilden der mindestens einen Schweißnaht (10) zum Bilden von freistehenden Mikrostrukturen.

2. Verfahren nach Anspruch 1, bei dem die Zwischenschicht (8) aus einem dielektrischen Material gebildet ist.

3. Verfahren nach Anspruch 1 oder 2, bei dem das Material der Zwischenschicht (8) ausgewählt ist aus der Gruppe umfassend: SiO₂, Si₃N₄, TiN, SiC, III-V-Verbindungshalbleiter und Legierungen davon.

4. Verfahren nach einem der vorhergehenden Ansprüche, bei dem die Zwischenschicht (8) vor dem Verbinden auf dem Substrat (3) und/oder auf dem optischen Kristall (2) abgeschieden wird.

5. Verfahren nach einem der vorhergehenden Ansprüche, bei dem die Zwischenschicht (8) eine Dicke (d) zwischen 1 nm und 50 µm, bevorzugt zwischen 400 nm und 5 µm, aufweist.

6. Verfahren nach einem der vorhergehenden Ansprüche, bei dem der optische Kristall (2) ausgewählt ist aus der Gruppe umfassend: LiNbO₃, LiTaO₃, KTP und Diamant.

7. Verfahren nach einem der vorhergehenden Ansprüche, bei dem der gepulste Laserstahl (5) mit einer Wellenlänge (λ_{L}) von mehr als 800 nm, bevorzugt von mehr als 1000 nm, auf die Oberfläche (7) eingestrahlt wird.

8. Verfahren nach einem der vorhergehenden Ansprüche, bei dem der gepulste Laserstrahl (5) mit einer Pulsdauer (τ) zwischen 0,1 ps und 20 ps, bevorzugt zwischen 0,1 ps und 2 ps, auf die Oberfläche (7) eingestrahlt wird.

9. Verfahren nach einem der vorhergehenden Ansprüche, bei dem der gepulste Laserstrahl (5) mit einer mittleren Laserleistung zwischen 0,1 W und 20 W, bevorzugt zwischen 1 W und 15 W, auf die Oberfläche (7) eingestrahlt wird.

10. Verfahren nach einem der vorhergehenden Ansprüche, bei dem der gepulste Laserstrahl (5) mit einer Pulsrepetitionsrate zwischen 200 kHz und 2 MHz auf die Oberfläche (7) eingestrahlt wird.

11. Verfahren nach einem der vorhergehenden Ansprüche, bei dem der gepulste Laserstrahl (5) mit einem quasi-nichtbeugenden Strahlprofil, insbesondere mit einem Bessel-ähnlichen Strahlprofil, auf die Zwischenschicht (8) eingestrahlt wird.

12. Verfahren nach einem der vorhergehenden Ansprüche, weiter umfassend:
Ausbilden mindestens einer kontinuierlichen oder unterbrochenen Schweißnaht (10) entlang der Zwischenschicht (8) durch Bewegen des gepulsten Laserstrahls (5) und des optischen Kristalls (2) relativ zueinander entlang einer Vorschubrichtung (v).

13. Verfahren nach einem der vorhergehenden Ansprüche, bei dem der Wellenleiter (11) außerhalb der mindestens einen Schweißnaht (10) angeordnet ist.

14. Verfahren nach einem der vorhergehenden Ansprüche, weiter umfassend:
Strukturieren einer Oberfläche des optischen Kristalls (2), bevorzugt nach dem Verbinden, zum Bilden von elektrischen, akustischen und/oder optischen Mikrobauelementen, bevorzugt von Filtern oder von Antennen, insbesondere für die Hochfrequenztechnologie.

## Claims

1. A method of bonding an optical crystal (2) to a substrate (3), comprising:
irradiating a pulsed laser beam (5) through the optical crystal (2) or through the substrate (3) onto a surface area (7), formed between the optical crystal (2) and the substrate (3) to firmly bond the optical crystal (2) to the substrate (3) by forming a fusion zone (9),
wherein
an intermediate layer (8) is formed between the optical crystal (2) and the substrate (3), and wherein the pulsed laser beam (5) is irradiated onto the surface area (7) of the intermediate layer (8) to form the fusion zone (9),
**characterized by**
removing material from the optical crystal (2) after bonding to form at least one waveguide (11) on the optical crystal (2)
or by
selectively removing the intermediate layer (8) by etching before or after forming the at least one weld seam (10) to form free-standing microstructures.

2. The method according to claim 1, in which the intermediate layer (8) is formed from a dielectric material.

3. The method according to claim 1 or 2, wherein the material of the intermediate layer (8) is selected from the group comprising: SiO₂, Si₃N₄, TiN, SiC, III-V compound semiconductors and alloys thereof.

4. The method according to any one of the preceding claims, wherein the intermediate layer (8) is deposited on the substrate (3) and/or on the optical crystal (2) before bonding.

5. The method according to any one of the preceding claims, wherein the intermediate layer (8) has a thickness (d) between 1 nm and 50 µm, preferably between 400 nm and 5 µm.

6. The method according to any one of the preceding claims, wherein the optical crystal (2) is selected from the group comprising: LiNbO₃, LiTaO₃, KTP and diamond.

7. The method according to any one of the preceding claims, wherein the pulsed laser beam (5) is irradiated onto the surface area (7) with a wavelength (λ_{L}) of more than 800 nm, preferably more than 1000 nm.

8. The method according to any one of the preceding claims, wherein the pulsed laser beam (5) is irradiated onto the surface area (7) with a pulse duration (τ) between 0.1 ps and 20 ps, preferably between 0.1 ps and 2 ps.

9. The method according to any one of the preceding claims, in which the pulsed laser beam (5) is irradiated onto the surface area (7) with an average laser power of between 0.1 W and 20 W, preferably between 1 W and 15 W.

10. The method according to any one of the preceding claims, in which the pulsed laser beam (5) is irradiated onto the surface area (7) at a pulse repetition rate of between 200 kHz and 2 MHz.

11. The method according to any one of the preceding claims, in which the pulsed laser beam (5) is irradiated onto the intermediate layer (8) with a quasi-nondiffractive beam profile, in particular with a Bessel-like beam profile.

12. The method according to any one of the preceding claims, further comprising:
forming at least one continuous or interrupted weld seam (10) along the intermediate layer (8) by moving the pulsed laser beam (5) and the optical crystal (2) relative to each other along a feed direction (v).

13. The method according to any one of the preceding claims, wherein the waveguide
(11) is arranged outside the at least one weld seam (10).

14. The method according to any one of the preceding claims, further comprising:
structuring a surface area of the optical crystal (2), preferably after bonding, to form electrical, acoustic and/or optical microdevices, preferably filters or antennas, in particular for high frequency technology.

## Revendications

1. Procédé de liaison d'un cristal (2) optique avec un substrat (3), comprenant :
l'irradiation d'un faisceau laser (5) pulsé à travers le cristal (2) optique ou à travers le substrat (3) pour atteindre une surface (7), formée entre le cristal (2) optique et le substrat (3), afin de réaliser une liaison cohésive du cristal (2) optique avec le substrat (3) par l'élaboration d'une zone de fusion (9),
dans lequel
une couche intermédiaire (8) est formée entre le cristal (2) optique et le substrat (3), et dans lequel le faisceau laser (5) pulsé est irradié sur la surface (7) de la couche intermédiaire (8) pour l'élaboration de la zone de fusion (9),
**caractérisé par**
l'enlèvement de matériau du cristal (2) optique après la liaison, pour la formation d'au moins un guide d'ondes (11) sur le cristal (2) optique,
ou par
l'élimination sélective de la couche intermédiaire (8) par gravure avant ou après l'élaboration dudit au moins un cordon de soudure (10), pour la formation de microstructures autoportantes.

2. Procédé selon la revendication 1, dans lequel la couche intermédiaire (8) est formée à partir d'un matériau diélectrique.

3. Procédé selon la revendication 1 ou 2, dans lequel le matériau de la couche intermédiaire (8) est choisi à partir du groupe comprenant : SiO₂, Si₃N₄, TiN, SiC, des semi-conducteurs composés III-V et leurs alliages.

4. Procédé selon l'une des revendications précédentes, dans lequel la couche intermédiaire (8) est déposée sur le substrat (3) et/ou sur le cristal (2) optique avant la liaison.

5. Procédé selon l'une des revendications précédentes, dans lequel la couche intermédiaire (8) présente une épaisseur (d) comprise entre 1 nm et 50 µm, de préférence entre 400 nm et 5 µm.

6. Procédé selon l'une des revendications précédentes, dans lequel le cristal (2) optique est choisi à partir du groupe comprenant : LiNbO₃, LiTaO₃, KTP et diamant.

7. Procédé selon l'une des revendications précédentes, dans lequel le faisceau laser (5) pulsé est irradié sur la surface (7) avec une longueur d'onde (λ_{L}) supérieure à 800 nm, de préférence supérieure à 1000 nm.

8. Procédé selon l'une des revendications précédentes, dans lequel le faisceau laser (5) pulsé est irradié sur la surface (7) avec une durée d'impulsion (τ) comprise entre 0,1 ps et 20 ps, de préférence entre 0,1 ps et 2 ps.

9. Procédé selon l'une des revendications précédentes, dans lequel le faisceau laser (5) pulsé est irradié sur la surface (7) avec une puissance laser moyenne comprise entre 0,1 W et 20 W, de préférence entre 1 W et 15 W.

10. Procédé selon l'une des revendications précédentes, dans lequel le faisceau laser (5) pulsé est irradié sur la surface (7) avec une fréquence de répétition des impulsions comprise entre 200 kHz et 2 MHz.

11. Procédé selon l'une des revendications précédentes, dans lequel le faisceau laser (5) pulsé est irradié sur la couche intermédiaire (8) avec un profil de faisceau quasi non diffractant, en particulier avec un profil de faisceau de type Bessel.

12. Procédé selon l'une des revendications précédentes, comprenant en outre :
l'élaboration d'au moins un cordon de soudure (10), continu ou interrompu, le long de la couche intermédiaire (8), par déplacement du faisceau laser (5) pulsé et du cristal (2) optique l'un par rapport à l'autre le long d'une direction d'avance (v).

13. Procédé selon l'une des revendications précédentes, dans lequel le guide d'ondes (11) est disposé en dehors d'au moins un cordon de soudure (10).

14. Procédé selon l'une des revendications précédentes, comprenant en outre :
la structuration d'une surface du cristal (2) optique, de préférence après la liaison, pour la formation de microcomposants électriques, acoustiques et/ou optiques, de préférence des filtres ou des antennes, en particulier pour la technologie haute fréquence.
